# EUROPÄISCHE PATENTSCHRIFT

(11) **EP 3 535 933 B1**
(45) Veröffentlichungstag und Bekanntmachung des Hinweises auf die Patenterteilung: **19.02.2025**
(21) Anmeldenummer: 17791649.1
(22) Anmeldetag: 20.10.2017
(51) Int. Cl.: H04L 12/28, G08C 17/02, H04M 1/72415, H04W 12/06, H04W 84/12

(54) **VERBINDEN EINES HAUSHALTSGERÄTS MIT EINER FERNBEDIENUNG**
CONNECTING A DOMESTIC APPLIANCE TO A REMOTE CONTROL
RELIER UN APPAREIL ÉLECTROMÉNAGER À UNE TÉLÉCOMMANDE

(30) Priorität: 04.11.2016 DE 102016221614
(43) Veröffentlichungstag der Anmeldung: 11.09.2019
(73) Patentinhaber: BSH Hausgeräte GmbH, 81739 München (DE)
(72) Erfinder: GARSCHHAMMER, Florian, 84529 Tittmoning (DE); WERNER, Hans Peter, 89537 Giengen (DE); GRIMMINGER, Jochen, 89407 Dillingen (DE); RODNEY, Christopher, 89355 Gundremmingen (DE)
(86) Internationale Anmeldenummer: PCT/EP2017/076815
(87) Internationale Veröffentlichungsnummer: WO 2018/082936

(56) Entgegenhaltungen:
- EP-A1- 2 950 289
- EP-A1- 3 139 546
- DE-A1- 102013 200 374
- MYSTROM AG: "Quick-Start für Kunden ohne Swisscom Internet-Box", 8 November 2016 (2016-11-08), XP055672341, Retrieved from the Internet <URL:https://mystrom.ch/wp-content/uploads/2017/01/myStrom_WiFi_Switch_CH_DE.pdf> [retrieved on 20200228]

## Beschreibung

Die Erfindung betrifft ein Haushaltsgerät aufweisend mindestens ein Schaltelement und mindestens eine Netzwerkschnittstelle zum Verbinden des Haushaltsgeräts mit einem drahtlosen lokalen Netzwerk. Die Erfindung betrifft auch ein Verfahren zum Betreiben eines solchen Haushaltsgeräts. Die Erfindung ist insbesondere vorteilhaft anwendbar auf Kältegeräte.

WO 2016/085582 A1 offenbart ein Verfahren zur erstmaligen Verbindungsaufnahme eines Geräts mit Funkübertragung mit einem Zugangspunkt unter Verwendung eines Druccknopfs an dem Zugangspunkt. Dieses Verfahren umfasst ein Empfangen einer Anfrage an dem Zugangspunkt, einem drahtlosen Netzwerk beizutreten und Empfangen eines Druckknopf-Befehls, um das Gerät mit Funkübertragung mit dem Zugangspunkt zu koppeln. Das Verfahren verhindert dann eine Übertragung aller dem Zugangspunkt zugeordneten "Service Set Identifiers" (SSIDs) und bestimmt, ob es dem Gerät mit Funkübertragung erlaubt ist, mit dem Zugangspunkt zu koppeln. Der Zugangspunkt sendet dann nur eine SSID, die dem Gerät mit Funkübertragung zugeordnet ist, so dass fehlerhafte Paarungen zwischen dem Zugangspunkt und dem drahtlosen Gerät verhindert werden.

WO 2015/039874 A1 offenbart ein Verfahren zum Anbinden eines Haushaltsgeräts an ein drahtloses Heimnetzwerk, das folgende Schritte umfasst: Empfangen von Zugangsdaten des Heimnetzwerks durch ein tragbares Kommunikationsendgerät; Aufbauen einer von dem Heimnetzwerk separaten drahtlosen Kommunikationsverbindung zwischen dem Haushaltsgerät einerseits und dem tragbaren Kommunikationsendgerät andererseits gemäß einem vorbestimmten Nahdistanz-Kommunikationsstandard; und Übertragen von Steuerbefehlen von dem tragbaren Kommunikationsendgerät über die Kommunikationsverbindung an das Haushaltsgerät, wobei durch die Steuerbefehle das Haushaltsgerät zum Anbinden an das drahtlose Heimnetzwerk unter Verwendung der Zugangsdaten angesteuert wird.

EP 2 913 906 A1 offenbart ein Verfahren zur Fernsteuerung und/oder Fernüberwachung des Betriebs eines Haushaltsgeräts mithilfe eines Kommunikationsgeräts eines Benutzers, wobei das Haushaltsgerät an ein lokales Heimnetzwerk angebunden ist und das Kommunikationsgerät mit einem Internetserver kommuniziert, auf welchem ein Benutzerkonto des Benutzers geführt wird, auf welchem Daten bezüglich des Haushaltsgeräts abgelegt sind, und wobei die Fernsteuerung und/oder Fernüberwachung des Haushaltsgeräts durch das Kommunikationsgerät unter Zugriff auf die Daten des Benutzerkontos und unter Vermittlung des lokalen Heimnetzwerks erfolgt, wobei auf dem Internetserver ein von dem einen Benutzerkonto separates weiteres Benutzerkonto eines anderen Benutzers geführt wird, wobei sowohl auf dem einen als auch auf dem weiteren Benutzerkonto Daten bezüglich ein und desselben Haushaltsgeräts abgelegt werden, sodass die Fernsteuerung und/oder Fernüberwachung dieses Haushaltsgeräts wahlweise unter Zugriff auf das eine oder das weitere Benutzerkonto durchgeführt wird.

EP 2 950 289 A1 zeigt ein Gerät mit mehreren Schaltelementen.

EP 3 139 546 A1 zeigt ein Haushaltsgerät, das sich drahtlos fernbedienen lässt.

Die im Internet auffindbare PDF-Datei der MyStrom AG: "Quick-Start für Kunden ohne Swisscom Internet-Box", August 2016 (2016-08); XP055672341, abrufbar unter https://mystrom.ch/wp-content/uploads/2017/01/myStrom_WiFi_Switch_CH_DE.pdf, zeigt einen Steckdosenadapter, dessen Schaltelement je nach Betätigungsdauer unterschiedliche Funktionen auslöst.

DE 10 2013 200 374 A1 zeigt ein Haushaltsgerät gemäß dem Oberbegriff des Anspruchs 1.

Es ist die **Aufgabe** der vorliegenden Erfindung, ein Haushaltsgerät, insbesondere Kältegerät bereitzustellen, das bei seiner Inbetriebnahme ein geringeres Sicherheitsrisiko gegen Ausspähung besitzt. Ferner soll ein dafür geeignetes Betriebsverfahren zum Betreiben des Haushaltsgeräts bereitgestellt werden.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Haushaltsgerät, aufweisend mindestens ein Schaltelement und mindestens eine Netzwerkschnittstelle zum Verbinden des Haushaltsgeräts mit einem lokalen Netzwerk, wobei das Haushaltsgerät genau ein Schaltelement aufweist und mittels einer Betätigung des Schaltelements über das lokale Netzwerk mit einer Fernbedienung verbindbar ist.

Das Haushaltsgerät weist mindestens ein Schaltelement und mindestens eine Netzwerkschnittstelle zum Verbinden des Haushaltsgeräts mit einem lokalen Netzwerk auf,
wobei das Haushaltsgerät
   - genau ein Schaltelement, insbesondere eine Taste, aufweist und
   - mittels einer Betätigung des Schaltelements über das lokale Netzwerk mit einer Fernbedienung verbindbar ist.
   Erfindungsgemäß ist das Haushaltsgerät eingerichtet, die über das lokale Netzwerk mit einer Fernbedienung herzustellende Verbindung mit der Fernbedienung wie folgt herzustellen:
      a) Einmaliges Betätigen eines Schaltelements des Haushaltsgeräts,
      b) Herstellen einer Verbindung des Haushaltsgeräts mit einem lokalen Netzwerk und dann
      c) Herstellen der Verbindung des Haushaltsgeräts mit der Fernbedienung über das lokale Netzwerk,
wobei das Haushaltsgerät in Schritt b)
   - sich direkt, d.h. unter Umgehung des lokalen Netzwerks, drahtlos mit der Fernbedienung (S) verbindet, dann
   - Zugangsdaten für das lokale Netzwerk von der Fernbedienung direkt drahtlos empfängt und dann
   - mittels der Zugangsdaten eine Verbindung mit dem lokalen Netzwerk herstellt.

Dieses Haushaltsgerät weist die Vorteile auf, dass es besonders einfach und preiswert umsetzbar ist und zudem eine optisch nur sehr gering gestörte Frontseite ermöglicht. Darüber hinaus kann eine Fehlbedienung durch einen Nutzer in besonders hohem Maße ausgeschlossen werden, was eine Nutzerfreundlichkeit erhöht. Zudem lässt sich so eine Zahl von Anfragen bei einem Kundendienst des Hersteller oder Vertreibers des Haushaltsgeräts verringern.

Es ist eine Ausgestaltung, dass das Haushaltsgerät ein Kältegerät ist. Das Kältegerät kann ein Kühlschrank, eine Gefriertruhe, ein Weinlagerschrank usw. oder eine Kombination daraus (z.B. ein Kühlschrank mit einem separaten Gefrierfach) sein.

Es ist noch eine Ausgestaltung, dass das Schaltelement eine Taste ist, z.B. eine Sensortaste oder eine Kurzhubtaste. Unter einem Schaltelement kann insbesondere ein Schaltelement zum Steuern des Haushaltsgeräts im laufenden Betrieb verstanden werden. Ein Ein/Aus-Schalter zur galvanischen Trennung des Haushaltsgeräts von einer elektrischen Versorgung zählt dann nicht zu den Schaltelementen. Alternativ ist das Schaltelement das einzige mechanisch durch einen Nutzer direkt betätigbare Schaltelement des Haushaltsgeräts.

Eine Netzwerkschnittstelle kann als ein Modul (auch als Kommunikationsmodul oder COM-Modul bezeichenbar) in dem Haushaltsgerät verbaut sein und z.B. mit einer zentralen Steuereinheit des Haushaltsgeräts verbunden sein. Das Haushaltsgerät kann auch als "internetfähiges Haushaltsgerät" angesehen oder bezeichnet werden. Die Netzwerkschnittstelle kann auch als Kommunikationsschnittstelle bezeichnet werden.

Mindestens eine Netzwerkschnittstelle ist eine Funkschnittstelle ist. Dies erlaubt eine besonders flexible Anbindung von Fernsteuerungen an das Haushaltsgerät. Zusätzlich kann das Haushaltsgerät eine drahtgebundene Netzwerkschnittstelle aufweisen, z.B. eine Ethernet-Schnittstelle.

Es ist auch noch eine Ausgestaltung, dass das lokale Netzwerk ein drahtloses lokales Netzwerk ist. Das drahtlose lokale Netzwerk kann ein WLAN ("Wireless Local Area Network") oder Heim-Netzwerk sein. Das drahtlose lokale Netzwerk kann nach Wi-Fi zertifiziert sein bzw. Wi-Fi-konform sein. Das Haushaltsgerät kann mit dem drahtlosen lokale Netzwerk drahtlos oder drahtgebunden verbunden sein.

Dass das Haushaltsgerät mittels der Betätigung des Schaltelements über das lokale Netzwerk mit der Fernbedienung verbindbar ist, kann umfassen, dass mittels der Betätigung ein Verbindungsablauf initiierbar ist. Der Verbindungsablauf kann mit Nutzerabfrage oder ohne eine Nutzerabfrage ablaufen.

Es ist eine Weiterbildung, dass die Fernbedienung ein geeignet eingerichtetes Nutzerendgerät ist, z.B. ein ebenfalls mit einer Netzwerkschnittstelle und einer entsprechenden Applikationssoftware ausgerüstetes Nutzerendgerät. Das Nutzerendgerät kann beispielsweise ein Rechner (Desktop, Laptop usw.) oder ein mobiles Endgerät (Smartphone, Tablet usw.) sein. Die Netzwerkschnittstelle des Nutzerendgeräts umfasst insbesondere mindestens eine Funkschnittstelle, z.B. eine WLAN-Schnittstelle und/oder eine Bluetooth-Schnittstelle und/oder eine NFC-Schnittstelle.

Vorteilhafterweise ist das Verfahren bereits mit Anschluss des Haushaltsgeräts an ein Stromnetz ohne weitere Vorbereitungen durchführbar.

Es ist noch eine Ausgestaltung, dass das Haushaltsgerät alphanumerisch anzeigelos ist. Dass das Haushaltsgerät "alphanumerisch anzeigelos" ist, umfasst, dass das Haushaltsgerät keine alphanumerische Anzeige oder "Display" aufweist, also keine Anzeige, die alphanumerische Zeichen darstellen kann. Es ist eine Weiterbildung, dass das Haushaltsgerät keine alphanumerische Anzeige aufweist, die Symbole darstellen kann. Insbesondere weist ein alphanumerisch anzeigeloses Haushaltsgerät keinen bildpunktartig aufgebauten Bildschirm (z.B. LCD-Bildschirm) und keine Segmentanzeige auf. Diese Ausgestaltung ergibt den Vorteil, dass das Haushaltsgerät besonders einfach und preiswert umsetzbar ist und zudem eine optisch besonders gering gestörte Frontseite ermöglicht.

Alternativ kann das Haushaltsgerät eine alphanumerische Anzeige aufweist, insbesondere einen Bildschirm, insbesondere einen berührungsempfindlichen Bildschirm ("Touchscreen"). Dies ergibt den Vorteil, dass Anzeigen über den Verbindungszustand des Haushaltsgeräts einem Nutzer direkt anzeigbar sind. Für den Fall, dass ein Touchscreen vorhanden ist, kann das Schaltelement als berührungsempfindlicher Bereich des Touchscreens ausgebildet sein ("Touchtaste"). Das Vorhandensein eines typischerweise bildpunktbasierten Bildschirms ermöglicht den Vorteil einer besonders aussagekräftigen Darstellung, z.B. auch einer Darstellung von Symbolen. Die alphanumerische Anzeige kann aber auch eine Segmentanzeige sein, z.B. eine Siebensegmentanzeige. Besonders vorteilhaft hierbei ist ein Vorhandensein mindestens zweier Segmentanzeigen, da dann typische Abkürzungen für den Verbindungszustand (z.B. "Cn" für "Connection", "AC" für "Automatic Connection" oder WPS, "SA" für "Software Access Point" usw. darstellbar sind.

Es ist ferner eine Ausgestaltung, dass das Schaltelement eine Taste ist und mittels unterschiedlicher Betätigungsmuster der Taste unterschiedliche Funktionen auslösbar sind. So lässt sich ohne eine Beeinträchtigung einer Nutzerbequemlichkeit eine vielfältige Funktionalität mit einer einzigen Taste erreichen.

Es ist eine Ausgestaltung davon, dass die unterschiedlichen Betätigungsmuster unterschiedliche Betätigungsdauern umfassen. Beispielsweise kann bei einer Betätigung der Taste für eine Zeitdauer ]0 s; X s[ eine erste Funktion ausgelöst werden, bei einer Betätigung der Taste für eine Zeitdauer [X s; Y s[ eine zweite Funktion ausgelöst werden, usw.

Betätigungsmuster können zusätzlich oder alternativ mehrfach hintereinander ausgeführte Betätigungen (z.B. einen "Doppelklick") umfassen. Beispielsweise kann mit einer einfachen kurzen Betätigung des Schaltelements ein Verbindungsversuch mit dem lokalen Netzwerk gemäß einer ersten Art (z.B. unter Verwendung eines PBC-Ablaufs) durchgeführt werden und mit einem Doppelklick gemäß einer zweiten Art (z.B. unter Verwendung eines WPS-Ablaufs) durchgeführt werden.

Es ist auch eine Ausgestaltung, dass die unterschiedlichen Funktionen die Herstellung der Verbindung des Haushaltsgeräts mit der Fernbedienung und zusätzlich mindestens eine Funktion aus der Gruppe: Invertierung einer bestehenden Art einer Verbindung (z.B. verbunden oder getrennt) des Haushaltsgeräts mit dem lokalen Netzwerk und/oder Zurücksetzung zumindest einer Netzwerkschnittstelle des Haushaltsgeräts umfassen. Insbesondere kann bei einer Betätigung der Taste für eine Zeitdauer ]0 s; X s[ das Herstellen der Verbindung des Haushaltsgeräts mit der Fernbedienung ausgelöst werden, bei einer Betätigung der Taste für eine Zeitdauer [X s; Y s[ die Invertierung der bestehenden Art der Verbindung ausgelöst werden und bei einer Betätigung der Taste für eine Zeitdauer [Y s; ∞[ die Zurücksetzung zumindest einer Netzwerkschnittstelle ausgelöst werden. Beispielsweise können X = 3 s und Y = 10 s betragen.

Unter einer Invertierung der bestehenden Art der Verbindung mit dem lokalen Netzwerk kann insbesondere ein Trennen einer Verbindung von dem lokalen Netzwerk, wenn aktuell eine solche Verbindung besteht, und ein Herstellen einer Verbindung mit dem lokalen Netzwerk, wenn aktuell keine solche Verbindung besteht, verstanden werden. Alternativ kann anstelle des Invertierens auch einfach nur ein Trennen der Verbindung zu dem lokalen Netzwerk vorgesehen sein.

Es ist außerdem eine Ausgestaltung, dass das Haushaltsgerät mindestens eine Indikatorleuchte oder "Lämpchen" aufweist und dem Schaltelement genau ein Lämpchen ("Zustandslämpchen") zugeordnet ist, mittels dessen ein Verbindungszustand des Haushaltsgeräts anzeigbar ist. Die erleichtert es einem Nutzer auf eine preiswerte Weise, einen Zustand der Verbindung des Haushaltsgeräts zu überprüfen. Es ist eine Weiterbildung, dass das Lämpchen ein Symbol darstellt. Es ist eine Weiterbildung, dass das Lämpchen symbollos ist, also kein Symbol darstellt. Insbesondere kann es ein Lämpchen auszeichnen, dass eine Änderung eines durch einen Nutzer erfahrbaren optischen Eindrucks sich nur aus einer Änderung einer Helligkeit des von dem Lämpchen abgestrahlten Lichts ergibt, einschließlich einer Ein/Aus-Sequenz, z.B. eines Blinkens mit einer vorgegebenen Frequenz.

Es ist eine Ausgestaltung davon, dass das mindestens eine Lämpchen mindestens eine LED als Lichtquelle aufweist. LEDs sind vorteilhafterweise preiswert und langlebig.

Es ist eine Weiterbildung, dass zumindest das Zustandslämpchen ein bezüglich seiner Lichtabgabe farblich durchstimmbares Lämpchen ist. So kann die Farbe des von dem Lämpchen abgegebenen Lichts zur Information des Nutzers verwendet werden. Auch kann das Zustandslämpchen blinken, insbesondere mit unterschiedlichen Frequenzen, einschließlich eines Dauerleuchtens.

Es ist noch eine Weiterbildung, dass ein weiteres Lämpchen zur Anzeige eines Fehlerfalls ("Fehlerlämpchen") vorhanden ist. In einer Variante leuchtet das Fehlerlämpchen rot.

Es ist noch eine Weiterbildung, dass das Haushaltsgerät nur das Zustandslämpchen und das Fehlerlämpchen aufweist. Dies ermöglicht eine besonders aufgeräumt und hochwertig anmutende Front des Haushaltsgeräts, da insgesamt nur noch drei, zudem vergleichsweise klein und flächenbündig ausführbare Bedienelemente (nämlich das Schaltelement, das Zustandslämpchen und das Fehlerlämpchen) vorhanden sind.

Es ist eine Weiterbildung, dass für eine Bereitstellung von Nutzerinformation ein Lautsprecher vorhanden ist, insbesondere ein Summer, insbesondere ein eintoniger Summer.

Erfindungsgemäß ist vorgesehen, dass zur drahtlosen Verbindung des Haushaltsgeräts mit dem lokalen Netzwerk das Haushaltsgerät direkt drahtlos (also unter Umgehung des lokalen Netzwerks) mit der Fernbedienung verbindbar ist, dann Zugangsdaten für das lokale Netzwerk von der Fernbedienung auf das Haushaltsgerät direkt (d.h. über die direkte drahtlose Verbindung) übertragbar sind und dann die drahtlose Verbindung des Haushaltsgeräts mit dem lokalen Netzwerk mittels der empfangenen Zugangsdaten herstellbar ist. Dies ergibt den Vorteil einer hohen Bedienerfreundlichkeit, da ein Nutzer sich z.B. dabei nicht zu einem Zugangspunkt zu begeben braucht.

Es ist eine Weiterbildung, dass das Haushaltsgerät dazu eingerichtet ist, die direkte Datenverbindung mit der Fernbedienung während des Verbindungsaufbaus des Haushaltsgeräts mit dem lokalen Netzwerk aufrechtzuerhalten und der Fernbedienung über die direkte Datenverbindung ein Ergebnis des Verbindungsaufbaus mit dem lokalen Netzwerk (z.B. "erfolgreich" oder "erfolglos") zu übermitteln.

Es ist noch eine Weiterbildung, dass das Haushaltsgerät dazu eingerichtet ist, das Haushaltsgerät identifizierende Daten (z.B. eine Seriennummer) über die direkte Datenverbindung an die Fernbedienung zu übertragen. Dies ergibt den Vorteil, dass die folgende - insbesondere erstmalige - Verbindung des Haushaltsgeräts mit der Fernbedienung (Pairing) über das lokale Netzwerk in einer Variante keine Bestätigung durch die Fernbedienung mehr benötigt und daher automatisch ablaufen kann.

Es ist noch eine Weiterbildung, dass das Haushaltsgerät dazu eingerichtet ist, die direkte Datenverbindung mit der Fernbedienung automatisch aufzubauen.

Es ist noch eine Weiterbildung, dass das Haushaltsgerät dazu eingerichtet ist, über die direkte Datenverbindung Daten zu empfangen, um mindestens eine dem Schaltelement zugeordnete Funktion auszulösen. In anderen Worten kann über diese empfangenen Daten (z.B. einen entsprechenden Befehl, Trigger usw.) durch das Haushaltsgerät mindestens eine Funktion des Schaltelements ausgelöst oder ausgeführt werden, ohne das Schaltelement manuell betätigen zu müssen. Diese Weiterbildung entspricht also einer Möglichkeit einer "virtuellen" Betätigung des Schaltelements über ein direkt drahtlos verbundenes Gerät. Es kann eine maximale Zeitdauer (Timeout) zwischen dem Empfang entsprechender Daten und dem Auslösen der damit zusammenhängenden Funktion vorgesehen sein.

Es ist eine weitere Ausgestaltung, dass das Haushaltsgerät mit der Fernbedienung mittels der Netzwerkschnittstelle, insbesondere Funkschnittstelle, insbesondere WLAN-Schnittstelle, direkt verbindbar ist. Dies ergibt den Vorteil, dass das Haushaltsgerät die gleiche Netzwerkschnittstelle sowohl für die Verbindung mit dem lokalen Netzwerk bzw. dem zugehörigen Zugangspunkt als auch für die direkte Datenverbindung mit der Fernbedienung nutzen kann. Die direkte Datenverbindung kann beispielsweise eine eine Funkverbindung sein und nach einem sog. SAP ("Soft Access Point")-Prozess aufgebaut werden, z.B. gemäß dem sog. "Wi-Fi direct"-Standard.

Es ist eine alternative oder zusätzliche Ausgestaltung, dass das Haushaltsgerät zusätzlich zu der Netzwerkschnittstelle zur Verbindung mit dem mit dem lokalen Netzwerk (z.B. einer WLAN-Schnittstelle) eine drahtlose Nahbereichs-Funkschnittstelle aufweist und dass das Haushaltsgerät mit der Fernbedienung mittels der drahtlosen Nahbereichs-Funkschnittstelle direkt verbindbar ist. Dies kann einem Nutzer einen Verbindungsaufbau des Haushaltsgeräts mit dem lokalen Netzwerk erleichtern. Die Nahbereichs-Funkschnittstelle kann eine WPAN ("Wireless Personal Area Network")-Schnittstelle sein. Die Nahbereichs-Funkschnittstelle kann eine Bluetooth-Schnittstelle sein, so dass eine Bluetooth-Datenverbindung zwischen der Fernbedienung und dem Haushaltsgerät herstellbar ist. Die Nahbereichs-Funkschnittstelle kann eine NFC-Schnittstelle sein, so dass eine NFC-Datenverbindung zwischen der Fernbedienung und dem Haushaltsgerät herstellbar ist. Die direkte Datenverbindung kann auch eine Infrarotverbindung sein.

Die Verbindung des Haushaltsgeräts mit der Fernbedienung über das lokale Netzwerk (Pairing) kann nach aufgebauter Verbindung des Haushaltsgeräts mit dem lokalen Netzwerk automatisch oder unter Zwischenschaltung einer Nutzerabfrage (z.B. bezüglich einer Bestätigung der Verbindung) erfolgen. Die - insbesondere erstmalige - Verbindung des Haushaltsgeräts mit der Fernbedienung über das lokale Netzwerk kann auch als "Pairing" von Haushaltsgerät und Fernbedienung angesehen oder bezeichnet werden.

Das Pairing läuft insbesondere für eine bestimmte Fernbedienung einmalig ab. Wird diese Fernbedienung von dem lokalen Netzwerk getrennt und verbindet sich danach wieder mit dem lokalen Netzwerk, wird die Verbindung zwischen der Fernbedienung und dem Haushaltsgerät automatisch wiederhergestellt.

Es ist noch eine weitere Ausgestaltung, dass bei einer bereits hergestellten Verbindung des Haushaltsgeräts mit dem lokalen Netzwerk das Haushaltsgerät mittels einer Betätigung des Schaltelements unmittelbar mit einer weiteren Fernbedienung über das Drahtlos-Netzwerk verbindbar ist. In anderen Worten wird in dieser Ausgestaltung bei Betätigung des Schaltelements direkt ein Pairing mit der weiteren Fernbedienung vorgenommen. Dies ermöglicht eine besonders fehlerfreie und schnelle Verbindung des Haushaltsgeräts mit der weiteren Fernbedienung.

Für den Fall, dass das Haushaltsgerät drahtgebunden mit dem lokalen Netzwerk verbunden ist, braucht das Haushaltsgerät nicht (nochmals) über das Betätigen des Schaltelements mit dem lokalen Netzwerk verbunden werden. Das Betätigen des Schaltelements Schaltelement ist aber immer noch für das Pairing mit der Fernbedienung nutzbar.

Die Aufgabe wird auch gelöst durch ein Verfahren zum Betreiben eines Haushaltsgeräts, das genau ein Schaltelement und mindestens eine Netzwerkschnittstelle zum Verbinden des Haushaltsgeräts mit einem lokalen Netzwerk aufweist, wobei das Haushaltsgerät mittels eines Betätigens des Schaltelements über das lokale Netzwerk verbunden wird. Das Verfahren kann analog zu dem Haushaltsgerät ausgebildet werden und weist die gleichen Vorteile auf.

Die Aufgabe wird ferner dadurch gelöst, dass in dem Verfahren a) ein Schaltelement des Haushaltsgeräts einmalig betätigt wird, dann b) eine Verbindung des Haushaltsgeräts mit einem lokalen Netzwerk hergestellt wird und dann c) über das lokale Netzwerk eine Verbindung des Haushaltsgeräts mit einer Fernbedienung hergestellt wird. Das Verfahren kann analog zu dem Haushaltsgerät ausgebildet werden und weist die gleichen Vorteile auf.

So ist es eine Ausgestaltung, dass das Haushaltsgerät in Schritt b) mit dem lokalen Netzwerk über einen PBC-Ablauf datentechnisch verbunden wird.

Zum erfindungsgemäßen Verfahren gehört ferner, dass in Schritt b) das Haushaltsgerät direkt drahtlos mit der Fernbedienung datentechnisch verbunden wird, dann Zugangsdaten für das lokale Netzwerk von der Fernbedienung auf das Haushaltsgerät direkt drahtlos übertragen werden und dann eine datentechnische Verbindung des Haushaltsgeräts mit dem lokalen Netzwerk mittels der Zugangsdaten hergestellt wird. Die direkte drahtlose Verbindung ermöglicht es in einer Weiterbildung, die Fernbedienung als erweiterte Anzeige des Haushaltsgeräts und/oder als erweitertes Eingabefeld zu nutzen, insbesondere falls die Fernbedienung eine alphanumerische Anzeige, z.B. einen Touchscreen, aufweist. Insbesondere können auf der Fernbedienung so textuelle und/oder graphische Informationen angezeigt und textuelle Informationen eingegeben werden.

In einer Weiterbildung kann die gleiche WLAN-Schnittstelle sowohl zum Zugang zu dem lokalen Netzwerk verwendet werden als auch als ein Zugangspunkt für die direkte drahtlose Datenverbindung mit der Fernbedienung eingerichtet werden.

Ferner ist es eine Ausgestaltung, dass das Haushaltsgerät mit der Fernbedienung mittels eines anderen Datenübertragungsstandards (z.B. über Bluetooth oder über eine IR-Verbindung) verbunden wird als mit dem lokalen Netzwerk (z.B. über WLAN).

Es ist außerdem eine Ausgestaltung, dass die direkte drahtlose Verbindung zwischen dem Haushaltsgerät und der Fernbedienung zumindest so lange aufrechterhalten wird, bis das Haushaltsgerät der Fernbedienung darüber eine Mitteilung über eine erfolgreiche oder erfolglose Herstellung der Verbindung des Haushaltsgeräts mit dem lokalen Netzwerk übermittelt hat. So kann der Nutzer über den Status der Kopplung des Haushaltsgeräts mit dem lokalen Netzwerk besonders einfach und informativ informiert werden.

Es ist z.B. auch noch eine Weiterbildung, dass das Haushaltsgerät bei einer bereits hergestellten Verbindung des Haushaltsgeräts mit dem lokalen Netzwerk mittels einer Betätigung des Schaltelements mit einem weiteren Nutzerendgerät, insbesondere einer weiteren Fernbedienung, über das lokale Netzwerk verbunden wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt in Frontalansicht eine Skizze eines Haushaltsgeräts; und
- Fig.2: zeigt einen möglichen Verfahrensablauf zum Verbinden des Haushaltsgeräts mit einer Fernbedienung.

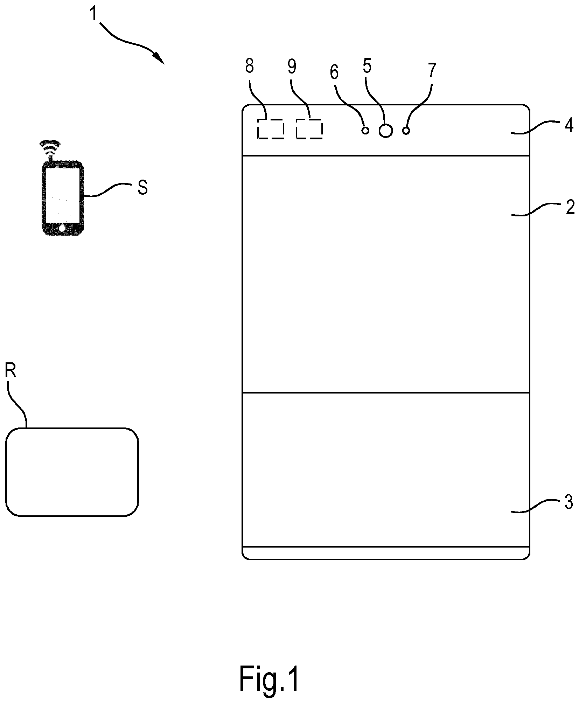

**Fig.1** zeigt ein Kältegerät in Form eines Kühlschranks 1. Der Kühlschrank 1 weist eine obere Tür 2 zum Verschließen eines Kühlfachs (o. Abb.) und eine untere Tür 3 zum Verschließen eines Gefrierfachs (o. Abb.) auf. Oberhalb des Kühlfachs weist der Kühlschrank 1 eine Bedienblende 4 auf. Die Bedienblende 4 weist lediglich drei Bedienelemente auf, nämlich genau ein Schaltelement in Form einer Taste 5, ein Zustandslämpchen 6 und ein Fehlerlämpchen 7. Die Taste 5 kann eine Sensortaste oder eine Hubtaste sein. Das Zustandslämpchen 6 ist dazu vorgesehen, einen Verbindungszustand des Kühlschranks 1 anzuzeigen. Zumindest das Zustandslämpchen 6 kann blinkend betrieben werden, insbesondere auch mit unterschiedlichen Frequenzen. Während das Fehlerlämpchen 7 rot leuchtet, kann das Zustandslämpchen 6 z.B. grün leuchten. Lichtfarbe des Zustandslämpchens 6 kann auch farblich variiert werden. Die Lämpchen 6 und 7 können LEDs als Lichtquellen aufweisen oder LEDs sein.

Der Kühlschrank 1 weist ferner eine WLAN-Schnittstelle in Form eines Wi-Fi-Moduls 8 und optional eine Nahbereichs-Funkschnittstelle in Form eines Bluetooth-Moduls 9 auf.

Der Kühlschrank 1 weist hier keine alphanumerische Anzeige wie einem LCD-Bildschirm, eine Segmentanzeige o.ä. auf.

Mittels einer Betätigung der Taste 5 lässt sich der Kühlschrank 1 über ein lokales Heim-Netzwerk oder Heim-WLAN, hier angedeutet durch einen Zugangspunkt in Form eines Routers R, mit einer Fernbedienung in Form eines Smartphones S verbinden. Das Smartphone S kann dazu mit einer Applikationssoftware ("App") ausgerüstet sein, welche eine Fernsteuerung des Kühlschranks 1 erlaubt, z.B. eine Einstellung einer Kühltemperatur des Kühlfachs und des Gefrierfachs.

Der Kühlschrank 1 ist so ausgebildet, dass mittels unterschiedlicher Betätigungsdauern der Taste 5 unterschiedliche Funktionen auslösbar sind, nämlich bei einer Betätigung der Taste 5 für eine Zeitdauer ]0 s; 3 s[ ein Herstellen der Verbindung mit dem Smartphone S, bei einer Betätigung der Taste 5 für eine Zeitdauer [3 s; 10 s[ ein Invertieren der bestehenden Art der Drahtlosverbindung und bei einer Betätigung der Taste 5 für eine Zeitdauer [10 s; ∞[ ein Zurücksetzen des Wi-Fi-Moduls 8 und ggf. des Bluetooth-Moduls 9, ggf. sogar des gesamten Kühlschranks 1 einschließlich seiner zentralen Steuereinrichtung (o. Abb.).

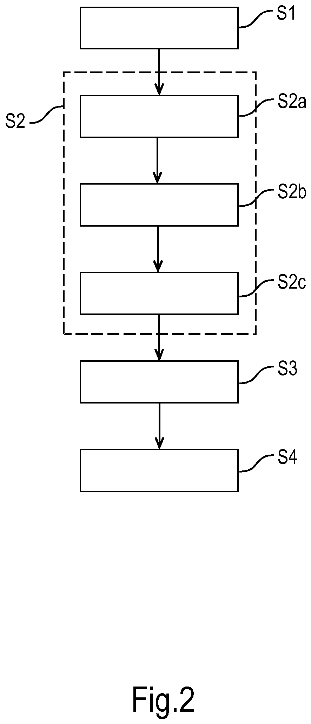

**Fig.2** zeigt einen möglichen Verfahrensablauf zum Verbinden des Kühlschranks 1 mit dem Smartphone S.

In einem Schritt S1 wird der Kühlschrank 1 an ein Stromnetz angeschlossen. Das Zustandslämpchen 6 ist nicht aktiviert bzw. ist dunkel. Der Kühlschrank 1 ist noch nicht mit dem Router R verbunden.

In einem zweiten Schritt S2 wird der Kühlschrank 1 mit dem Heim-WLAN verbunden.

Dazu wird in einem ersten Teilschritt S2a durch ein kurzes Drücken der Taste 5 von bis zu drei Sekunden ein Ablauf eines Verbindens des Kühlschranks 1 mit dem Router R gestartet. Dies bewirkt, dass zunächst mittels des Wi-Fi-Moduls 8 oder, falls vorhanden, mittels des Bluetooth-Moduls 9 ein Datenkanal geöffnet wird, über den das Smartphone S direkt mit dem Kühlschrank 1 Daten austauschen kann. Das Zustandslämpchen 6 blinkt dabei mit einer Frequenz von einem halben Hz. Für den Fall, dass die direkte Datenverbindung über das Wi-Fi-Modul 8 läuft, kann das Wi-Fi-Modul 8 dazu ein eigenes ("Kühlschrank"-) WLAN öffnen.

In einem folgenden Teilschritt S2b überträgt das Smartphone (z.B. mittels einer entsprechenden Nutzerabfrage) Zugangsdaten (z.B. eine SSID und ein Kennwort) zum Zugang auf das Heim-WLAN über die direkte Datenverbindung auf den Kühlschrank 1. Der Kühlschrank 1 kann eine Seriennummer oder eine andere Kennzeichnung auf das Smartphone S übertragen.

In einem folgenden Schritt S2c versucht der Kühlschrank 1, über das Wi-Fi-Modul 8 mittels der empfangenen Zugangsdaten eine Datenverbindung mit dem Router R herzustellen, um in das zugehörige Heim-WLAN eingebunden zu werden. Ist dieser Schritt 2c erfolgreich, blinkt das Zustandslämpchen 6 mit einer Frequenz von einem Hz.

Der Schritt S2 kann bzw. die Schritte S2a bis S2c können bei Verwendung oder Vorhandensein nur des WLAN-Moduls 8 insbesondere nach dem sog. SAP ("Soft Access Point"-) Prozess ablaufen. Alternativ kann Schritt S2 nach einem PBC-Prozess in Form eines WPS ("Wi-Fi Protected Setup")-Prozesses ablaufen.

Wird das Bluetooth-Modul 9 für die direkte Datenverbindung zwischen dem Kühlschrank 1 und dem Smartphone S verwendet, kann die direkte Datenverbindung in Schritt S2c aufrechterhalten werden und beispielsweise dazu verwendet werden, einen Erfolg oder Misserfolg der Einbindung des Kühlschranks 1 in das Heim-WLAN auf dem Smartphone anzuzeigen.

In einem folgenden Schritt S3 wird automatisch oder nach einem erneuten Drücken der Taste 5 durch den Kühlschrank 1 versucht, über das Heim-WLAN ein Pairing mit dem Smartphone S herzustellen. War zuvor von dem Kühlschrank 1 eine Seriennummer o.ä. auf das Smartphone S übertragen worden, kann auf eine nutzerseitige Bestätigung des Pairings durch das Smartphone S ggf. verzichtet werden. Ansonsten kann ein Nutzer über eine entsprechende Nutzerabfrage durch das Smartphone S das Pairing durch das Smartphone S zulassen. Mit der erfolgreichen Durchführung der Schritte S2 und S3 leuchtet das Zustandslämpchen 6 dauerhaft. Der Kühlschrank 1 kann nun mittels des WLAN-fähigen Smartphones S fernbedient und ggf. auch überwacht werden.

Für den Fall, dass ein weiteres Nutzerendgerät, z.B. ein weiteres Smartphone oder anderes mobiles Endgerät (o. Abb.), mit dem Kühlschrank 1 verbunden werden soll, kann in einem weiteren Schritt S4 - bei dann bestehender Wi-Fi-Verbindung zu dem Heim-WLAN bzw. zu dem Router R die Taste 5 nochmals kurz für bis zu drei Sekunden gedrückt werden. Es erfolgt dann ein Pairing-Ablauf analog zu Schritt S3 zum Durchführen des Pairings mit dem weiteren Nutzerendgerät, z.B. für bis zu zwei Minuten. Während dieses erneuten Pairings kann das Zustandslämpchen 6 z.B. wieder mit einer Frequenz von einem halben Hz blinken. Das weitere Nutzerendgerät kann ebenfalls als eine Fernbedienung ausgebildet oder vorgesehen sein.

Wird die Taste 5 mittellang zwischen drei Sekunden und zehn Sekunden gedrückt, wird die Datenverbindung zum Heim-WLAN invertiert. Dies bedeutet, dass eine vorhandene Datenverbindung zum Heim-WLAN getrennt wird. Bei getrennter Datenverbindung ist das Zustandslämpchen 6 ausgeschaltet. Bei einem erneuten mittellangen Betätigen der Taste 5 wird die Datenverbindung zu dem Heim-WLAN bzw. dem Router R wieder aufgebaut.

Wird die Taste 5 lang (d.h., zehn Sekunden oder länger) gedrückt, kommt es zu einem Reset des Wi-Fi-Moduls 8 und - falls vorhanden - des Bluetooth-Moduls 9 auf die Werkseinstellungen. Diese können einem Zustand nach Schritt S1 entsprechen.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Kühlschrank
- 2: Obere Tür
- 3: Untere Tür
- 4: Bedienblende
- 5: Taste
- 6: Zustandslämpchen
- 7: Fehlerlämpchen
- 8: Wi-Fi-Modul
- 9: Bluetooth-Modul
- R: Router
- S: Smartphone
- S1-S4: Verfahrensschritte
- S1a-S1c: Teilschritte von Verfahrensschritt S2

## Patentansprüche

1. Haushaltsgerät (1), insbesondere Kältegerät, aufweisend
- mindestens ein Schaltelement (5) und
- mindestens eine Netzwerkschnittstelle (8), insbesondere Funkschnittstelle, zum Verbinden des Haushaltsgeräts (1) mit einem lokalen Netzwerk (R),
wobei das Haushaltsgerät (1)
- genau ein Schaltelement (5), insbesondere eine Taste, aufweist und
- mittels einer Betätigung des Schaltelements (5) über das lokale Netzwerk (R) mit einer Fernbedienung (S) verbindbar ist,
**dadurch gekennzeichnet, dass** das Haushaltsgerät (1) eingerichtet ist, die über das lokale Netzwerk (R) mit einer Fernbedienung (S) herzustellende Verbindung mit der Fernbedienung (S) wie folgt herzustellen:
a) Einmaliges Betätigen (S2a) eines Schaltelements (5) des Haushaltsgeräts (1),
b) Herstellen (S2c) einer Verbindung des Haushaltsgeräts (1) mit einem lokalen Netzwerk (R) und dann
c) Herstellen (S3) der Verbindung des Haushaltsgeräts (1) mit der Fernbedienung (S) über das lokale Netzwerk (R),
wobei das Haushaltsgerät (1) in Schritt b)
- sich direkt, d.h. unter Umgehung des lokalen Netzwerks (R), drahtlos mit der Fernbedienung (S) verbindet, dann
- Zugangsdaten für das lokale Netzwerk (R) von der Fernbedienung (S) direkt drahtlos empfängt (S2b) und dann
- mittels der Zugangsdaten eine Verbindung mit dem lokalen Netzwerk (R) herstellt (S2c).

2. Haushaltsgerät (1) nach Anspruch 1, **dadurch gekennzeichnet, dass** das Haushaltsgerät (1) alphanumerisch anzeigelos ist.

3. Haushaltsgerät (1) nach einem der vorhergehenden Ansprüche, **dadurch gekennzeichnet, dass** das Schaltelement (5) eine Taste ist und mittels unterschiedlicher Betätigungsmuster des Schaltelements (5) unterschiedliche Funktionen auslösbar sind.

4. Haushaltsgerät (1) nach Anspruch 3, **dadurch gekennzeichnet, dass** die unterschiedlichen Betätigungsmuster unterschiedliche Betätigungsdauern umfassen.

5. Haushaltsgerät (1) nach einem der Ansprüche 3 oder 4, **dadurch gekennzeichnet, dass** die unterschiedlichen Funktionen das Herstellen der Verbindung des Haushaltsgeräts (2) mit der Fernbedienung (S) und zusätzlich mindestens eine Funktion aus der Gruppe
- Invertierung einer bestehenden Art einer Verbindung des Haushaltsgeräts (1) mit dem lokalen Netzwerk, nämlich Trennen der Verbindung von dem lokalen Netzwerk, wenn aktuell eine solche Verbindung besteht, und Herstellen der Verbindung mit dem lokalen Netzwerk, wenn aktuell keine solche Verbindung besteht, und/oder
- Zurücksetzung zumindest einer Netzwerkschnittstelle (1) des Haushaltsgeräts (1)
umfassen.

6. Haushaltsgerät (1) nach einem der vorhergehenden Ansprüche, **dadurch gekennzeichnet, dass** das Haushaltsgerät (1) mindestens ein Lämpchen (8, 9) aufweist und dem Schaltelement (5) ein Lämpchen (8) zugeordnet ist, mittels dessen ein Verbindungszustand des Haushaltsgeräts (1) anzeigbar ist.

7. Haushaltsgerät (1) nach Anspruch 6, **dadurch gekennzeichnet, dass** das Lämpchen (8) mindestens eine LED als Lichtquelle aufweist und farblich durchstimmbar ist.

8. Haushaltsgerät (1) nach einem der vorhergehenden Ansprüche, **dadurch gekennzeichnet, dass** die Netzwerkschnittstelle (8) eine WLAN-Schnittstelle ist und dass das Haushaltsgerät (1) mit der Fernbedienung (S) mittels der WLAN-Schnittstelle direkt verbindbar ist.

9. Haushaltsgerät (1) nach einem der vorhergehenden Ansprüche, **dadurch gekennzeichnet, dass** das Haushaltsgerät (1) zusätzlich eine drahtlose Nahbereichs-Funkschnittstelle (9) aufweist und dass das Haushaltsgerät (1) mit der Fernbedienung (S) mittels der drahtlosen Nahbereichs-Funkschnittstelle (9) direkt verbindbar ist.

10. Haushaltsgerät (1) nach einem der vorhergehenden Ansprüche, **dadurch gekennzeichnet, dass** bei einer bereits hergestellten Verbindung des Haushaltsgeräts (1) mit dem lokalen Netzwerk (R) das Haushaltsgerät (1) mittels einer Betätigung des Schaltelements (5) mit einem weiteren Nutzerendgerät, insbesondere einer weiteren Fernbedienung, über das lokale Netzwerk (R) verbindbar ist.

11. Verfahren zum Betreiben eines Haushaltsgeräts (1)nach einem der vorhergehenden Ansprüche,
**dadurch gekennzeichnet, dass** in dem Verfahren
a) ein Schaltelement (5) des Haushaltsgeräts (1) einmalig betätigt wird (S2a), dadurch
b) eine Verbindung des Haushaltsgeräts (1) mit einem lokalen Netzwerk (R) hergestellt wird (S2c) und dann
c) eine Verbindung des Haushaltsgeräts (1) mit einer Fernbedienung (S) über das lokale Netzwerk (R) hergestellt wird (S3),
**dadurch gekennzeichnet, dass** in Schritt b)
- das Haushaltsgerät (1) direkt, d.h. unter Umgehung des lokalen Netzwerks (R), drahtlos mit der Fernbedienung (S) verbunden wird, dann
- Zugangsdaten für das lokale Netzwerk (R) von der Fernbedienung (S) auf das Haushaltsgerät (1) direkt drahtlos übertragen werden (S2b) und dann
- eine Verbindung des Haushaltsgeräts (1) mit dem lokalen Netzwerk (R) mittels der Zugangsdaten hergestellt wird (S2c).

12. Verfahren (1) nach Anspruch 11, **dadurch gekennzeichnet, dass** das Haushaltsgerät (1) mit der Fernbedienung (S) mittels eines anderen Datenübertragungsstandards direkt verbunden wird als über das lokale Netzwerk (R).

13. Verfahren (1) nach Anspruch 11 oder 12, **dadurch gekennzeichnet, dass** die direkte drahtlose Verbindung zwischen dem Haushaltsgerät (1) und der Fernbedienung (S) zumindest so lange aufrechterhalten wird, bis das Haushaltsgerät (1) der Fernbedienung (S) darüber eine Mitteilung über eine erfolgreiche oder erfolglose Herstellung der Verbindung des Haushaltsgeräts (1) mit dem lokalen Netzwerk (R) übermittelt hat.

## Claims

1. Household appliance (1), in particular refrigeration appliance, having
- at least one switching element (5) and
- at least one network interface (8), in particular radio interface, for connecting the household appliance (1) to a local network (R),
wherein the household appliance (1)
- has exactly one switching element (5), in particular a button, and
- is able to be connected to a remote control (S) via the local network (R) by means of an actuation of the switching element (5),
**characterised in that** the household appliance (1) is configured to establish the connection, which is to be established via the local network (R) with a remote control (S), using the remote control (S), as follows:
a) one-time actuation (S2a) of a switching element (5) of the household appliance (1),
b) establishing (S2c) of a connection of the household appliance (1) to a local network (R) and then
c) establishing (S3) of the connection of the household appliance (1) to the remote control (S) via the local network (R),
wherein the household appliance (1), in step b),
- directly wirelessly connects to the remote control (S), i.e. by bypassing the local network (R), then
- directly wirelessly receives (S2b) access data for the local network (R) from the remote control (S), and then
- establishes (S2c) a connection to the local network (R) by means of the access data.

2. Household appliance (1) according to claim 1, **characterised in that** the household appliance (1) is without an alphanumeric display.

3. Household appliance (1) according to one of the preceding claims, **characterised in that** the switching element (5) is a button and different functions are able to be triggered by means of different actuation patterns of the switching element (5).

4. Household appliance (1) according to claim 3, **characterised in that** the different actuation patterns comprise different actuation durations.

5. Household appliance (1) according to one of claims 3 or 4, **characterised in that** the different functions comprise establishing the connection of the household appliance (2) to the remote control (S) and additionally at least one function from the group
- inverting an existing type of connection of the household appliance (1) to the local network, namely disconnecting the connection from the local network, if such a connection currently exists, and establishing the connection to the local network, if no such connection currently exists, and/or
- resetting at least one network interface (1) of the household appliance (1).

6. Household appliance (1) according to one of the preceding claims, **characterised in that** the household appliance (1) has at least one light (8, 9) and the switching element (5) is allocated a light (8), by means of which a connection status of the household appliance (1) is able to be displayed.

7. Household appliance (1) according to claim 6, **characterised in that** the light (8) has at least one LED as a light source and is able to be tuned with regard to its colour.

8. Household appliance (1) according to one of the preceding claims, **characterised in that** the network interface (8) is a WLAN interface and the household appliance (1) is able to be directly connected to the remote control (S) by means of the WLAN interface.

9. Household appliance (1) according to one of the preceding claims, **characterised in that** the household appliance (1) additionally has a wireless close-range radio interface (9) and the household appliance (1) is able to be directly connected to the remote control (S) by means of the wireless close-range radio interface (9).

10. Household appliance (1) according to one of the preceding claims, **characterised in that**, in the case of an already established connection of the household appliance (1) to the local network (R), the household appliance (1) is able to be connected to a further user terminal, in particular a further remote control, via the local network (R) by means of an actuation of the switching element (5).

11. Method for operating a household appliance (1) according to one of the preceding claims,
**characterised in that** in the method
a) a switching element (5) of the household appliance (1) is actuated (S2a) one time, thus
b) a connection of the household appliance (1) to a local network (R) is established (S2c) and then
c) a connection of the household appliance (1) to a remote control (S) is established (S3) via the local network (R),
**characterised in that**, in step b),
- the household appliance (1) is connected to the remote control (S) directly wirelessly, i.e. by bypassing the local network (R), then
- access data for the local network (R) is transmitted (S2b) from the remote control (S) to the household appliance (1) directly wirelessly, and then
- a connection of the household appliance (1) to the local network (R) is established (S2c) by means of the access data.

12. Method (1) according to claim 11, **characterised in that** the household appliance (1) is directly connected to the remote control (S) by means of a different data transmission standard compared to the connection via the local network (R).

13. Method (1) according to claim 11 or 12, **characterised in that** the direct wireless connection between the household appliance (1) and the remote control (S) is maintained for at least until the household appliance (1) has transmitted a notification, relating to a successful or unsuccessful establishing of the connection of the household appliance (1) to the local network (R), to the remote control (S) via said direct wireless connection.

## Revendications

1. Appareil ménager (1), en particulier appareil frigorifique, présentant
- au moins un élément de commutation (5) et
- au moins une interface réseau (8), en particulier une interface radio, pour connecter l'appareil ménager (1) à un réseau local (R), dans lequel l'appareil ménager (1)
- présente exactement un élément de commutation (5), en particulier une touche, et
- peut être connecté à une télécommande (S) via le réseau local (R) au moyen d'un actionnement de l'élément de commutation (5),
- **caractérisé en ce que** l'appareil ménager (1) est aménagé pour établir comme suit la connexion à établir avec la télécommande (S) via le réseau local (R) :
a) actionnement unique (S2a) d'un élément de commutation (5) de l'appareil ménager (1),
b) établissement (S2c) d'une connexion de l'appareil ménager (1) à un réseau local (R) et ensuite
c) établissement (S3) de la connexion de l'appareil ménager (1) à la télécommande (S) via le réseau local (R),
dans lequel l'appareil ménager (1), à l'étape b),
- se connecte directement, c'est-à-dire en contournant le réseau local (R), sans fil à la télécommande (S), ensuite
- reçoit directement sans fil (S2b) les données d'accès au réseau local (R) de la télécommande (S), ensuite
- établit une connexion au réseau local (R) au moyen des données d'accès (S2c).

2. Appareil ménager (1) selon la revendication 1, **caractérisé en ce que** l'appareil ménager (1) est sans affichage alphanumérique.

3. Appareil ménager (1) selon l'une des revendications précédentes, **caractérisé en ce que** l'élément de commutation (5) est une touche et différentes fonctions peuvent être déclenchées au moyen de différents modèles d'actionnement de l'élément de commutation (5).

4. Appareil ménager (1) selon la revendication 3, **caractérisé en ce que** les différents modèles d'actionnement comprennent différentes durées d'actionnement.

5. Appareil ménager (1) selon l'une des revendications 3 ou 4, **caractérisé en ce que** les différentes fonctions comprennent l'établissement de la connexion de l'appareil ménager (2) à la télécommande (S) et en outre au moins une fonction du groupe
- inversion d'un type de connexion existant de l'appareil ménager (1) au réseau local, à savoir la déconnexion du réseau local lorsqu'une telle connexion existe actuellement et l'établissement de la connexion au réseau local lorsqu'aucune telle connexion n'existe actuellement, et/ou
- réinitialisation d'au moins une interface réseau (1) de l'appareil ménager (1).

6. Appareil ménager (1) selon l'une des revendications précédentes, **caractérisé en ce que** l'appareil ménager (1) présente au moins un témoin lumineux (8, 9) et un témoin lumineux (8), au moyen duquel un état de connexion de l'appareil ménager (1) peut être affiché, est affecté à l'élément de commutation (5).

7. Appareil ménager (1) selon la revendication 6, **caractérisé en ce que** le témoin lumineux (8) présente au moins une LED comme source lumineuse et est de couleur variable.

8. Appareil ménager (1) selon l'une des revendications précédentes, **caractérisé en ce que** l'interface réseau (8) est une interface Wi-Fi et **en ce que** l'appareil ménager (1) peut être directement connecté à la télécommande (S) au moyen de l'interface Wi-Fi.

9. Appareil ménager (1) selon l'une des revendications précédentes, **caractérisé en ce que** l'appareil ménager (1) présente en outre une interface radio sans fil à courte portée (9) et **en ce que** l'appareil ménager (1) peut être directement connecté à la télécommande (S) au moyen de l'interface radio sans fil à courte portée (9).

10. Appareil ménager (1) selon l'une des revendications précédentes, **caractérisé en ce qu'**en présence d'une connexion de l'appareil ménager (1) au réseau local (R) déjà établie, l'appareil ménager (1) peut être connecté à un terminal utilisateur supplémentaire, en particulier une télécommande supplémentaire, via la réseau local (R), au moyen d'un actionnement de l'élément de commutation (5).

11. Procédé d'exploitation d'un appareil ménager (1) selon l'une des revendications précédentes,
**caractérisé en ce que** dans le procédé
a) un élément de commutation (5) de l'appareil ménager (1) est actionné une seule fois (S2a), ce qui
b) établit (S2c) une connexion de l'appareil ménager (1) à un réseau local (R) et ensuite
c) une connexion de l'appareil ménager (1) à une télécommande (S) est établie (S3) via le réseau local (R),
**caractérisé en ce que**, à l'étape b)
- l'appareil ménager (1) est directement connecté, c'est-à-dire en contournant le réseau local (R), sans fil à la télécommande (S), ensuite
- les données d'accès au réseau local (R) sont directement transmises sans fil (S2b) de la télécommande (S) sur l'appareil ménager (1) et ensuite
- une connexion de l'appareil ménager (1) au réseau local (R) est établie au moyen des données d'accès (S2c).

12. Procédé (1) selon la revendication 11, **caractérisé en ce que** l'appareil ménager (1) est directement connecté à la télécommande (S) au moyen d'une norme de transmission de données différente de celle utilisée via le réseau local (R).

13. Procédé (1) selon la revendication 11 ou 12, **caractérisé en ce que** la connexion sans fil directe entre l'appareil ménager (1) et la télécommande (S) est maintenue au moins jusqu'à ce que l'appareil ménager (1) ait transmis à la télécommande (S) une notification concernant l'établissement fructueux ou infructueux de la connexion de l'appareil ménager (1) au réseau local (R).
